(19) Europäisches Patentamt
European Patent Office
Office européen des brevets

(11) Publication number: 0 299 466 B1

(12) EUROPEAN PATENT SPECIFICATION

(45) Date of publication of patent specification: **02.12.92**

(51) Int. Cl.5: **B01D 11/02**, B01D 15/02, B01J 47/10, C12N 11/00

(21) Application number: **88111287.4**

(22) Date of filing: **14.07.88**

(54) **Separator with movable receptacles.**

(30) Priority: **14.07.87 JP 174004/87**

(43) Date of publication of application:
**18.01.89 Bulletin 89/03**

(45) Publication of the grant of the patent:
**02.12.92 Bulletin 92/49**

(84) Designated Contracting States:
**CH DE FR LI SE**

(56) References cited:
**DE-A- 1 642 809**

(73) Proprietor: **KIKKOMAN CORPORATION**
**339 Noda**
**Noda-shi Chiba(JP)**

(72) Inventor: **AKAO Takeshi**
**177-1, Wakamatsu, Abiko-shi**
**Chiba(JP)**
Inventor: **Sakai, Morihiko**
**101-1, Miyazaki, Noda-shi**
**Chiba(JP)**
Inventor: **Ohsaki, Katsumichi**
**1293-26, Yamazaki, Noda-shi**
**Chiba(JP)**
Inventor: **Yamada, Muneki**
**101-2, Miyazaki, Noda-shi**
**Chiba(JP)**

(74) Representative: **Reichel, Wolfgang, Dipl.-Ing. et al**
**Reichel und Reichel Parkstrasse 13**
**W-6000 Frankfurt am Main 1(DE)**

EP 0 299 466 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention generally relates to separators and more particularly, to a system employing a plurality of receptacles in which separation and isolation, for instance, of solid and liquid components one from another is continuously carried out.

A wide variety of separators have hitherto been proposed to absorb a certain constituent of a mixture by means of absorbent or dissolve certain constituents of a mixture by means of a liquid with solvent properties for one of the constituents only.

Japanese patent publication No. 56-15820, laid-open on February 16, 1981, discloses a separator including an annular casing adapted to receive a receptacle therein. The receptacle has a plurality of chambers in which carbon molecular sieves are contained. When air under pressure is introduced into one of the chambers, only oxygen is absorbed into the carbon molecular sieve, whereas nitrogen is discharged from the chamber. The separation of air or concentration of oxygen from the air is continuously effected while the casing is being rotated by a motor. A similar separator is also disclosed in Japanese patent publication No. 54-138869, laid-open on October 27, 1979. These prior art separators, however, require a considerable floor space.

Japanese patent publication No. 59-74993, laid-open on April 27, 1984, uses a plurality of receptacles housed in a casing and having a net structure. Each of the receptacles has immobilized enzyme for fermentation reaction and is moved in the casing in its longitudinal direction. This prior art apparatus not only consumes a large floor space, but also requires large seals.

Japanese patent publication No. 56-45727, laid-open on April 25, 1981, employs a plurality of receptacles or units in which suitable absorbent is contained, the units being arranged one above the other in a colume. When exhaust gas, for instance, is introduced into the column through an inlet, sulfer oxides (SOx) are absorbed into the absorbent. The lowermost unit is then removed from the colume, and the new column is superposed on the uppermost column. When such exchange of units takes place, the seperator must be stopped once. This results in an inefficient operation.

It is, therefore, an object of this invention to provide a seperator with movable receptacles, which enables continuous and efficient separation.

According to the present invention, there is provided a separator for separating at least one component from a fluid, comprising a central casing including an upper disk and a lower disk, the both disks having a plurality of openings, and a plurality of columns extending between the openings of the upper and lower disks, a rotatable upper casing including a disk placed in contact with the upper disk of the central casing and having a plurality of openings, and a plurality of columns extending upwardly from said openings of said disks to an end wall of the upper casing and communicatable with the plurality of columns of the central casing, a rotatable lower casing including a disk placed in contact with the lower disk of the central casing and having a plurality of openings, and a plurality of columns extending downwardly from said openings of said disk to an end wall of said lower casing and communicatable with the plurality of columns of the central casing, a plurality of receptacles disposed within the plurality of columns, for containing material for causing said separation of said at least one component from said fluid, a plurality of inlet means communicating with said columns of the central casing for introducing said fluid into said columns, a plurality of outlet means communicating with said columns for removing said fluid and said at least one separated component out of said separator, said lower casing being provided with a plurality of means for vertical movement of said receptacles within said columns in the central casing whereby receptacles are moved between the columns of the central casing and the columns and of said upper casing and lower casing, respectively, and means for rotating the upper and lower casings such that columns of said upper and lower casings having received a receptacle from one column of the central casing by means of said vertical movement, are brought into alignment with another column of the central casing, respectively, before said means for vertical movement are again actuated.

The invention will now be described in detail below with reference to the accompanying drawings, in which:

FIG. 1 is a vertical section of a separator with movable receptacles according to the present invention;

FIG. 2 is a sectional view taken along the line II-II of FIG. 1, showing the lower disk of a central casing;

FIG. 3 is an enlarged sectional view showing the lower portion of a column of the central casing of FIG. 1;

FIG. 4 is a sectional view taken along the line IV-IV of FIG. 1;

Fig. 5 is a sectional view taken along the line V-V of FIG. 1;

FIGS. 6 through 10 show the manner in which the receptacles are circulated through the system;

FIG. 11 is a view similar to FIG. 2, but showing a modified form of the lower disk;

FIG. 12 is a view similar to FIG. 3, but showing a modified form of the column;

FIGS. 13 through 15 show various modifications of the receptacle shown in FIG. 1;

FIG. 16 is a plan view of the receptacle shown in FIG. 15;

FIG. 17 is an enlarged sectional view of a lower casing in modified form;

FIGS. 18 through 24 are schematic views of the system in use;

FIG. 25 is an enlarged view of a modification of a valve assembly shown in FIG. 1;

FIG. 26 is an enlarged sectional view showing a portion of the lower casing in alternative form;

FIGS. 27 and 29 are alternative forms of the system shown in FIG. 1;

FIG. 28 is an enlarged sectional view of the receptacle with O-rings; and

FIG. 30 is an alternative form of the system shown in FIG. 1.

With reference to FIGS. 1 and 2, there is shown a separator constructed according to the present invention and generally indicated at 1. The separator 1 generally includes a fixed central housing or casing 2. The casing 2 includes an upper disk 3 and a lower disk 4, both disks having two diametrically opposite apertures 3a and 4a, respectively. Disposed between the upper disk 3 and the lower disk 4 are two cylindrical tubes or hollow columns 5, each column 5 having at its lower end two diametrically opposite bosses 6 through which two radial holes 7 extend. A suitable number of cylindrical units or receptacles 8 are axially movable within the columns 5. Each of the receptacles 8 has screens 9 at near its opposite ends to define a chamber 10 in which absorbent or other agent is contained.

The receptacles 8 are held within the columns 5 by holders 11 placed on the lower disk or plate 4. More specifically, each of the holders 11 includes a pair of cylinders 12 disposed adjacent the column 5. Each cylinder 12 has a rod 13 which extends through the radial hole 7 into a recess 14 formed in the outer peripheral surface of the column 5 so as to hold the receptacles 8 in position. In the illustrated embodiment, the receptacles 8 in the columns 5 are each four in number, and the overall height of these four receptacles 8 is substantially equal to that of the column 5 of the central casing 2. As shown in FIG. 3, the receptacle 8 has two diametrically opposite openings 15 which are in communication with corresponding ports 17 of the column 5.

With reference to FIGS. 1 and 4, an upper rotary casing 20 includes a disk 21 held in contact with the upper surface of the upper disk 3 of the casing 2 and hermetically sealed by O-rings 22. The disk 21 has two diametrically opposite apertures 21a and at its center a fixed shaft 23 journaled in the upper disk 3 of the casing 2 through a bearing assembly 24 and connected to a motor 25. Upon actuation of the motor 25, the upper rotary casing 20 is rotated about the shaft 23. Two columns 26 extend upwardly from the upper surface of the disk 21. Each of these two columns 26 has an upper end closed by a cover 27 and a lower end held in communication with the aperture 21a. Each cover 27 has a port 28 through which suitable fluid is introduced into the casing. The port 28 is connected through a rotary joint 29 to a source of fluid as at S. In its normal operating orientation, the two columns 26 are communicated with the two columns 5 through the apertures 3a of the upper disk 3 and the apertures 21a of the disk 21. In the illustrated embodiment, the columns 26 are each sized to receive one receptacle therewithin.

With reference to FIGS. 1 and 5, a lower rotary casing 30 includes a disk 31 held in contact with the lower surface of the lower disk 4 and hermetically sealed by O-rings 32. The disk 31 has two diametrically opposite apertures 31a and at its center a fixed shaft 33 journaled in the lower disk 4 of the central casing 2 through a bearing assembly 34 and connected to a motor 35. Upon actuation of the motor 35, the lower rotary casing 30 is rotated about the shaft 33. Two columns 36 extend downwardly from the lower surface of the disk 31. Each column 36 has an upper end held in communication with the aperture 31a and a lower end closed by a cover 37. In its normal operating orientation, the columns 36 are each communicated with the columns 5 through the apertures 4a of the lower disk 4 and the apertures 31a of the disk 31. In the illustrated embodiment, the columns 36 are each sized to receive one receptacle therewithin. Fit within each column 36 is a support disk or plate 40 having a rod 41 which extends downwardly through an aperture 37a of the cover 37. Two lifters 43 in the form of a cylinder are located under the columns 36 and have rods 44. Extension of the rod 44, thus, causes the support plate 40 to move upwardly, whereas retraction of the rod 44 causes reverse or downward movement of the support plate 40.

A controller 50 is connected to control the motors 25, 35 as well as to the power cylinders 11, 43 through suitable valve assemblies 52, 54, respectively. The controller 50 is of conventional structure and will not be explained further.

Reference is now made to FIGS. 6 through 10 in which ten receptacles 8A to 8J are circulated through the system 1. As shown in FIG. 7, the rod 44 of the cylinder 43 (right) is extended to raise the support plate 40 until the top surface of the support plate 40 is brought into contact with the bottom of the receptacle 8E. The holders 11 are, then, enabled to retract the rods 13, so that the receptacles 8A to 8E are all supported by the support plate 40. The rod 44 is lowered to place the receptacle 8E within the column 36, and the rods 13 are extended into the recesses 14 of the receptacle 8D to hold the remaining four receptacles 8A to 8D in position in the column 5 (see FIG. 8). The rod 44 of the lifter 43 is further lowered to place the receptacle 8E at the bottom of the column 36, and then disengaged from the rod 41 of the support plate 40 (see FIG. 9). Thereafter, the motor 25 is actuated in a controlled manner to rotate the upper casing 20 through 180°, for instance in a clockwise direction, to place the receptacle 8J on the receptacle 8A. At the same time, the motor 35 is also actuated in a controlled manner to rotate the lower casing 30 through 180° in the same direction to move the receptacle 8E below the receptacle 8F (see FIG. 10). This operation is continuously effected so as to circulate the receptacles 8A to 8J through the columns 5, 26 and 36.

As shown in FIG. 11, the lower disk 4 of the central casing 2 may include an opening 4a through which the receptacles 8 are removed from the system 1 or new receptacles are supplied into the system 1. This arrangement is advantageous in that absorbent or other agent is readily exchangeable.

As shown in FIG. 12, ports 128, in place of the ports 28, may be formed in the upper portion of the columns 5. In this case, the ports 128 can be directly connected to a source of fluid S, and provision of the rotary joint 29 is no longer necessary. But, additional openings 115 are required in the upper portion of the columns 8 to communicate with the ports 128.

FIGS. 13 through 16 show modifications of the receptacle shown in FIG. 1. As shown in FIG. 13, a receptacle 108 may be formed by a plurality of rings 110 connected by a plurality of vertical members 112. A bag (not shown) in the form of a net is placed within the receptacle 108, and absorbent or other agent is contained therein. Alternatively, a receptacle 208 may be constituted by two different parts: an upper section 210 in which a chamber 212 is defined to contain absorbent or other agent therein, and a lower section 214 having openings 215 through which fluid flows (see FIG. 14). As shown in FIGS. 15 and 16, a receptacle 308 may include a vertical central shaft 310, an upper ring 312 surrounding near the upper end of the shaft 310 and connected thereto through a plurality of radial members 314, and a lower ring 316 surrounding near the lower end of the shaft 310 and connected to the shaft 310 through a plurality of radial members (not shown). Screens 320, 322 are attached to the upper and lower rings 312 and 316, respectively. A sheet 324, made, for example, of Teflon (TM), surrounds the rings 312 and 316 to define a chamber 326 in which absorbent or other agent is contained. This sheet 324 serves not only as a seal, but also as a lubricant.

With reference to FIG. 17, a plurality of receptacles 408 in the column 5 are similar in structure, but slightly larger than the upper section 210 of the receptacle 208. The receptacles 408 provide larger volume of chambers. In this case, fluid may flow out of the system through passages 443 formed in support plates 440 and ports 445 formed in covers 437.

FIGS. 18 through 24 schematically show the system in use. In FIG. 18, suitable absorbent such as activated carbon or ion exchanger is contained in the receptacles 8 which are circulated through the columns in a direction as indicated by the arrow A. In this example, absorption takes place in the left-hand columns whereas desorption takes place in the right-hand columns. More specifically, a sample in liquid form is first introduced into the system through the port 28 in the left-hand column 26. Specific component or groups of components are then absorbed into the absorbent, and the liquid sample flows out of the system through the port 17 in the left-hand column 5. The absorbent in the receptacles 8 is moved to the right-hand columns and is brought into contact with desorbent liquid which is introduced into the right-hand column 5 through its port 17. As a result, the absorbed component or components are removed from the absorbent and collected the port 28 of the right-hand column 26. When one of the receptacles 8 is moved from the left-hand column to the top of the right-hand column, some of the non-absorbed components still remain in the receptacle. To this end, as shown in FIG. 19, after the absorbed component or components are collected through an outlet O1, the receptacle is stopped for a while or slowed, so that the non-absorbed components may be returned to the left-hand columns with the disorbent liquid.

In FIG. 20, sample liquid includes two different components J, K, the component J being greater in absorptivity than the component K. The component K is, thus, movable faster than the component J while the sample liquid flows through the left-hand column 5. If the receptacles 8 are moved upwards in the left-hand column faster than the component J, but slower than the component K, then the component J is absorbed into the absorbent and transferred to the right-hand column, whereas the component K is discharged from the left-hand column through an outlet O2. Absorbed component or components in the receptacle as transferred to the top of the right-hand column are then brought into contact with desorbent liquid introduced into the right-hand column 5 through the port 17 and collected through an outlet O3. At this time, non-absorbed components in the same receptacle are returned to the left-hand column with the desorbent liquid.

In FIG. 21, coffee beans, for instance, are contained in the receptacles 8 which are circulated through the columns. Used coffee beans must be replaced with the new coffee beans. To this end, the receptacles 8 can be removed from and again supplied to the columns through the opening 4a as shown in FIG. 11 so as to effect such replacement. When extracting liquid, such as hot water and the like, with solvent properties for one of the constituents only is introduced into the left-hand column through the port 28, specific constituent is dissolved and carried out of the system through the port 28 of the right-hand column 26.

In FIG. 22, immobilized enzyme, for instance, is contained in the receptacles 8 which are circulated through the columns in a direction as indicated by the arrow A. When reactive liquid is introduced into the left-hand columns and is contacted with the immobilized enzyme in the receptacles 8, reaction product is produced and then collected from the system through the port 17. At the right-hand columns, specific liquid is introduced into the columns thorugh the port 17 so as to activate the immobilized enzyme in the receptacles 8. As shown in FIG. 23, if additional reactive liquid is supplied to the left-hand column 5 through a plurality of inlets I, more reaction product is obtainable.

With reference to FIG. 24, four of the system (only three are shown) as shown in FIG. 19 may be combined to successively separate four different components or constituents L, M, N and P.

FIG. 25 shows a modified form of the rotary joint. The rotary joint 70 includes an upper disk 71 having two vertically extending passageways 72, 73, and a lower disk 74 having two vertically extending passageways 75, 76. In the illustrated embodiment, the passageways 72, 73 are in communication with the passageways 75, 76, respectively. When either one of the disks is rotated relative to the other disk, the passageways 72, 73 are then brought into communication with the passageways 76, 75, respectively. With this rotary joint 70, two different fluids may be used, one flowing through one of the columns 5 while the other flowing through the other column.

FIG. 26 shows a modified form of the lower casing. Pistons 80 are fit within columns 81 (only one is shown). Each column 81 has at its buttom an opening 82 connected to a hydraulic circuit 83. The hydraulic circuit 83 has a valve assembly 84 which is, in turn, controllably operated by the controller 50.

Alternative forms of the invention are shown in FIGS. 27, 29 and 30 wherein parts similar to those shown in FIG. 1 are identified with the same reference numerals. As shown in FIG. 27, one of the lifters 43 is operatively connected to one of the columns 26 of the upper casing 20 within which the receptacles are moved downwards. This arrangement is advantageous particularly when a suitable number of O-rings 86 (see FIG. 28) are fit in the outer peripheral surface of each receptacle 8 whereby the receptacle 8 may not be moved downwards by its own weight due to friction. In the illustrated embodiment shown in FIG 29, a vertical shaft 90 extends from the disk 21 of the upper casing 20 to the disk 31 of the lower casing 30 and has a lower end connected to the motor 35. With reference to FIG. 30, the system includes a fixed central casing 502 having upper and lower disks 503, 504 between which six circumferentially equally spaced columns 505 extend. A rotary upper casing 520 has a disk 521 placed in contact with the upper disk 503 of the central casing 502, and six circumferentially equally spaced columns 526 communicatable with the six columns 505. Likewise, a rotary lower casing 530 has a disk 531 placed in contact with the lower disk 504 of the central casing 502, and six circumferentially equally spaced columns 536 communicatable with the columns 505. The upper and lower casings 520, 530 are rotatable through 60° each time drive means (not shown) is actuated. In case that the upper and lower casings 520, 530 are rotated in the same direction, the receptacles are first moved upwards in the column, transferred to the adjacent column, and then moved downwards. The receptacles are eventually circulated through all the columns. On the other hand, if the upper and lower casings 520, 530 are rotated in opposite directions, the receptacles are circulated through two adjacent columns only. In the latter example, three different separations are possible.

## Claims

**1.** Separator (1) for separating at least one component from a fluid, comprising a central casing (2) including an upper disk (3) and a lower disk (4), the both disks (3, 4) having a plurality of openings (3a, 4a), and a plurality of columns (5) extending between the openings (3a, 4a) of the upper and lower disks (3, 4), a rotatable upper casing (20) including a disk (21) placed in contact with the upper disk (3) of the central casing (2) and having a plurality of openings (21a), and a plurality of columns (26) extending upwardly from said openings (21a) of said disk (21) to an end wall (27) of the upper casing (20) and communicatable with the plurality of columns (5) of the central casing (2), a rotatable lower casing (30) including a disk (31) placed in contact with the lower disk (4) of the central casing (2) and having a plurality of openings (31a), and a plurality of columns (36) extending downwardly from said openings (31a) of said disk (31) to an end wall (37) of said lower casing (30) and communicatable with the plurality of columns (5) of the central casing (2), a plurality of receptacles (8) disposed within the plurality of columns (5, 26, 36), for containing material for causing said separation of said at least one component from said fluid, a plurality of inlet means (28; 128) communicating with said columns (5) of the central casing (2) for introducing said fluid into said columns (5), a plurality of outlet means (17) communicating with said columns (5) for removing said fluid and said at least one separated component out of said separator, said lower casing (30) being provided with a plurality of means (40, 41, 43, 44) for vertical movement of said receptacles within said columns (5) in the central casing (2) whereby receptacles are moved between the columns (5) of the central casing (2) and the columns (26) and (36) of said upper casing (20) and lower casing (30), respectively, and means (25,35) for rotating the upper and lower casings (20, 30) such that columns (26) and (36) of said upper and lower casings (20, 30) having received a receptacle (8) from one column (5) of the central casing (2) by means of said vertical movement, are brought into alignment with another column (5) of the central casing, respectively, before said means (40, 41, 43, 44) for vertical movement are again actuated.

## Patentansprüche

1. Trennvorrichtung (1) zum Abtrennen zumindest einer Komponente von einem Fluid, aufweisend ein zentrales Gehäuse (2), das eine obere Scheibe (3) und eine untere Scheibe (4) umfaßt, wobei die beiden Scheiben (3, 4) mehrere Öffnungen (3a, 4a) aufweisen, und mehrere Säulen (5), die sich zwischen den Öffnungen (3a, 4a) der oberen und unteren Scheibe (3, 4) erstrecken, ein drehbares oberes Gehäuse (20), das eine Scheibe (21) umfaßt, die in Kontakt mit der oberen Scheibe (3) des zentralen Gehäuses (2) angeordnet ist und mehrere Öffnungen (21a) aufweist, und mehrere Säulen (26), die sich von den Öffnungen (21a) der Scheibe (21) zu einer Endwandung (27) des oberen Gehäuses (20) nach oben erstrecken und mit den mehreren Säulen (5) des zentralen Gehäuses (2) kommunizierbar sind, ein drehbares unteres Gehäuse (30), das eine Scheibe (31) umfaßt, die in Kontakt mit der unteren Scheibe (4) des zentralen Gehäuses (2) angeordnet ist und mehrere Öffnungen (31a) aufweist, und mehrere Säulen (36), die sich von den Öffnungen (31a) der Scheibe (31) zu einer Endwandung (37) des unteren Gehäuses (30) nach unten erstrecken und mit den mehreren Säulen (5) des zentralen Gehäuses (2) kommunizierbar sind, mehrere Behältnisse (8), die innerhalb der mehreren Säulen (5, 26, 36) angeordnet sind und Material enthalten, das die Abtrennung zumindest dieser einen Komponente vom Fluid bewirkt, mehrere Einlaßeinrichtungen (28; 128), die mit den Säulen (5) des zentralen Gehäuses (2) kommunizieren, um das Fluid in die Säulen (5) einzuleiten, mehrere Auslaßeinrichtungen (17), die mit den Säulen (5) kommunizieren, um das Fluid und diese zumindest eine abgetrennte Komponente aus der Trennvorrichtung zu entfernen, wobei das untere Gehäuse (30) mit mehreren Einrichtungen (40, 41, 43, 44) zur Vertikalbewegung der Behältnisse innerhalb der Säulen (5) im zentralen Gehäuse (2) versehen sind, wodurch Behältnisse zwischen den Säulen (5) des zentralen Gehäuses (2) und den Säulen (26) und (36) des oberen Gehäuses (20) bzw. unteren Gehäuses (30) bewegt werden, und Einrichtungen (25, 35) zum Drehen des oberen und unteren Gehäuses (20, 30) derart, daß Säulen (26) und (36) des oberen und unteren Gehäuses (20, 30), die ein Behältnis (8) von einer Säule (5) des zentralen Gehäuses (2) durch die Vertikalbewegung empfangen haben, jeweils in Ausrichtung mit einer anderen Säule (5) des zentralen Gehäuses gebracht werden, bevor die Einrichtungen (40, 41, 43, 44) für die Vertikalbewegung erneut betätigt werden.

## Revendications

1. Séparateur (1) pour la séparation d'au moins un composant à partir d'un fluide comprenant une enveloppe centrale (2) comprenant un disque supérieur (3) et un disque inférieur (4), chacun des disques (3, 4) possédant une pluralité d'ouvertures (3a, 4a) et une pluralité de colonnes (5) s'étendant entre les ouvertures (3a, 4a) des disques supérieur et inférieur (3, 4), une enveloppe supérieure tournante (20) comprenant un disque (21) placé en contact avec le disque supérieur (3) de l'enveloppe centrale (2) et possédant une pluralité d'ouvertures (21a) et une pluralité de colonnes (26) s'étendant vers le haut à partir desdites ouvertures (21a) dudit disque (21) vers une paroi d'extrémité (27) de l'enveloppe supérieure (20) et pouvant communiquer avec la pluralité de colonnes (5) de l'enveloppe centrale (2), une enveloppe inférieure tournante (30) comprenant un disque (31) placé en contact avec le disque inférieur (4) de l'enveloppe centrale (2) et possédant une pluralité d'ouvertures (31a) et une pluralité de colonnes (36) s'étendant vers le bas à partir desdites ouvertures (31a) dudit disque (31) vers une paroi d'extrémité (37) de ladite enveloppe inférieure (30) et pouvant communiquer avec la pluralité de colonnes (5) de l'enveloppe centrale (2), une pluralité de récipients (8) placés à l'intérieur de la pluralité de colonnes (5, 26, 36) pour contenir un matériau provoquant ladite séparation d'au moins un composant dudit fluide, une pluralité de moyens d'entrée (28; 128) communiquant avec lesdites colonnes (5) de l'enveloppe centrale (2) pour l'introduction dudit fluide dans lesdites colonnes (5), une pluralité de moyens de sortie (17) communiquant avec lesdites colonnes (5) pour enlever ledit fluide et au moins ledit composant séparé hors dudit séparateur, ladite enveloppe inférieure (30) étant munie d'une pluralité de moyens (40, 41, 43, 44) pour un déplacement vertical desdits récipients à l'intérieur desdites colonnes (5) dans l'enveloppe centrale (2), les récipients se déplaçant ainsi entre les colonnes (5) de l'enveloppe centrale (2) et les colonnes (26) et (36) desdites enveloppes respectives supérieure (20) et inférieure (30) et des moyens (25, 35) pour faire tourner les enveloppes supérieure et inférieure (20, 30) de telle façon que les colonnes (26) et (36) desdites enveloppes supérieure et inférieure (20, 30), ayant reçu un récipient (8) d'une colonne (5) de l'enveloppe centrale (2) au moyen dudit déplacement vertical, soient amenées en alignement avec une autre colonne respective (5) de l'enveloppe centrale avant que lesdits moyens (40, 41, 43, 44) soient à nouveau actionnés pour un déplacement vertical.

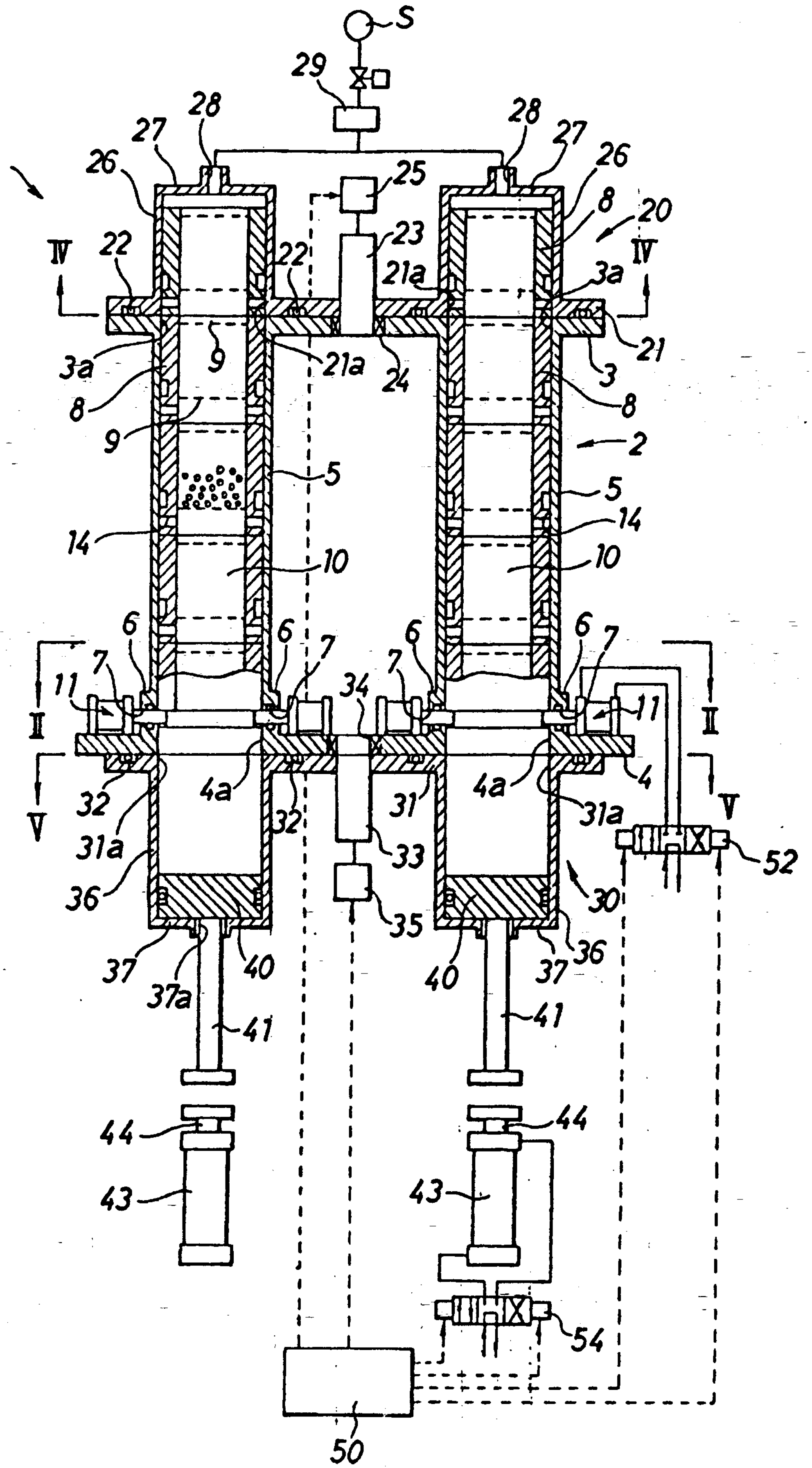
S
29
28
27
26
1
25
23
IV
22
21a
3a
21
9
24
3
8
20
2
5
14
10
6
7
34
11
II
4a
4
32
31
31a
V
33
52
36
35
30
40
37
37a
41
44
43
54
50

FIG. 1

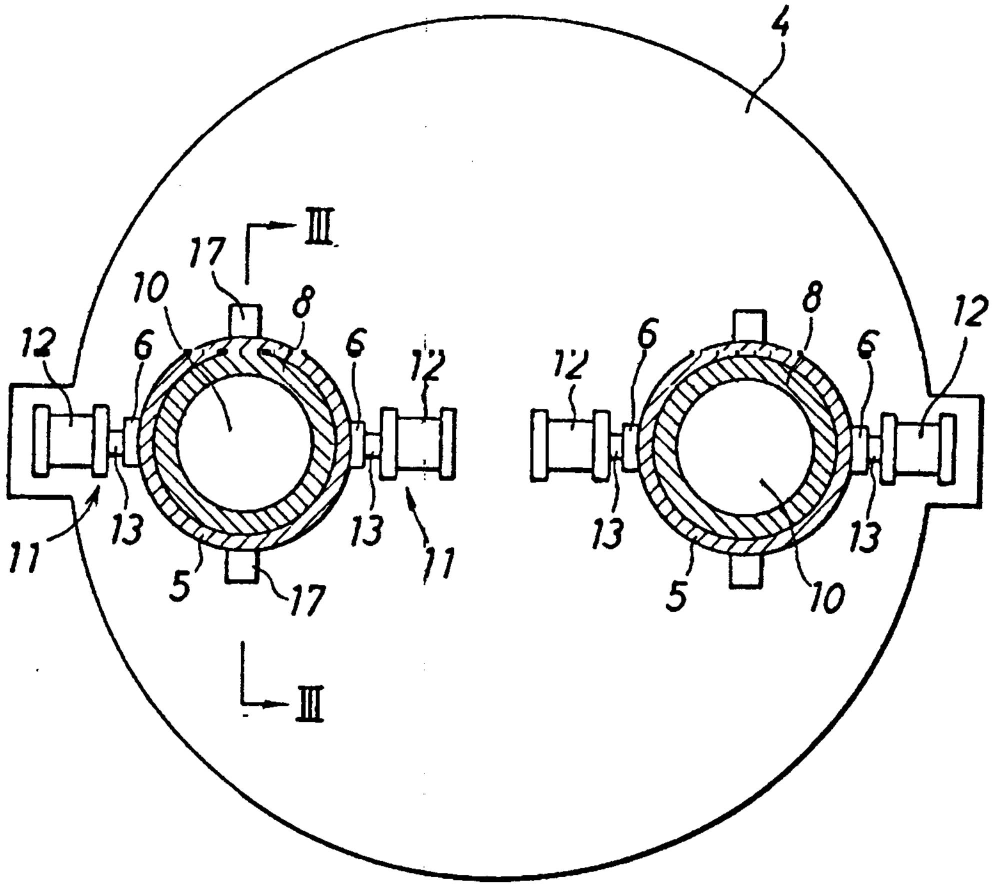


FIG. 2

FIG. 4

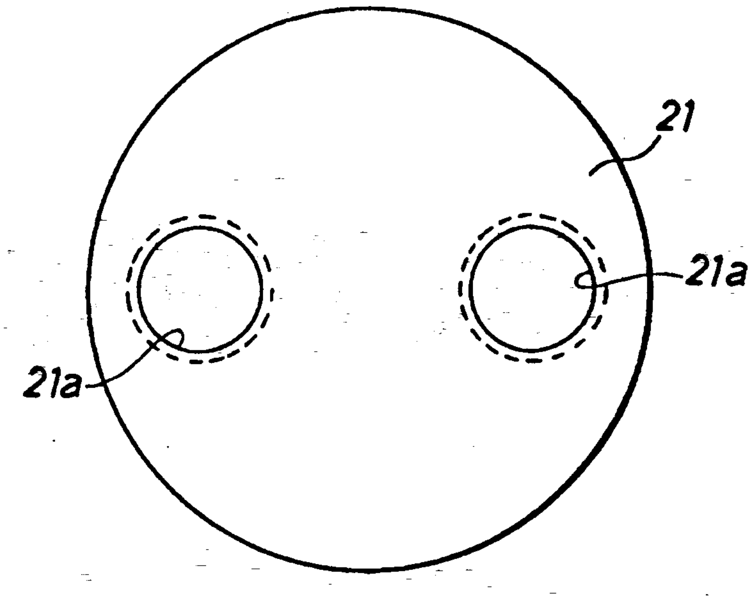


FIG. 5

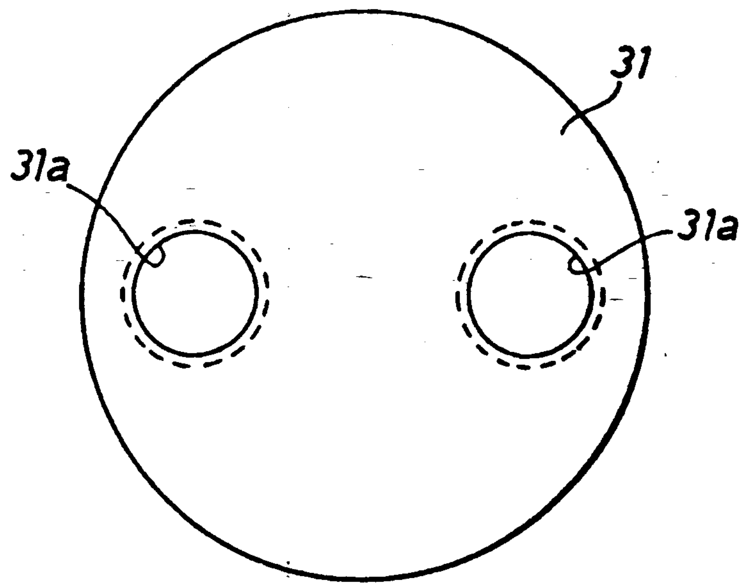

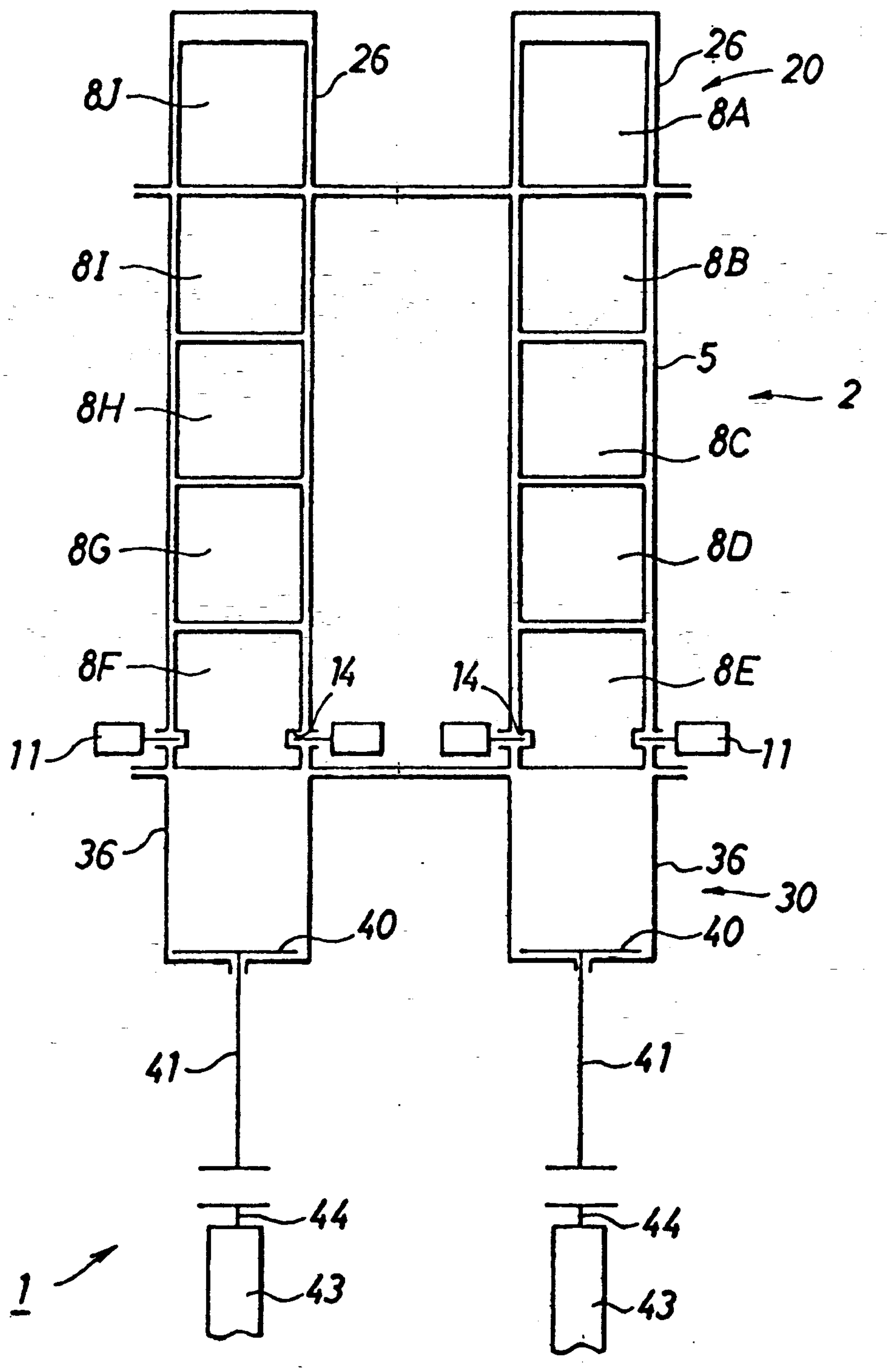
8J
26
26
20
8A
8I
8B
5
2
8H
8C
8G
8D
8F
14
14
8E
11
11
36
36
30
40
40
41
41
44
44
1
43
43

FIG. 6

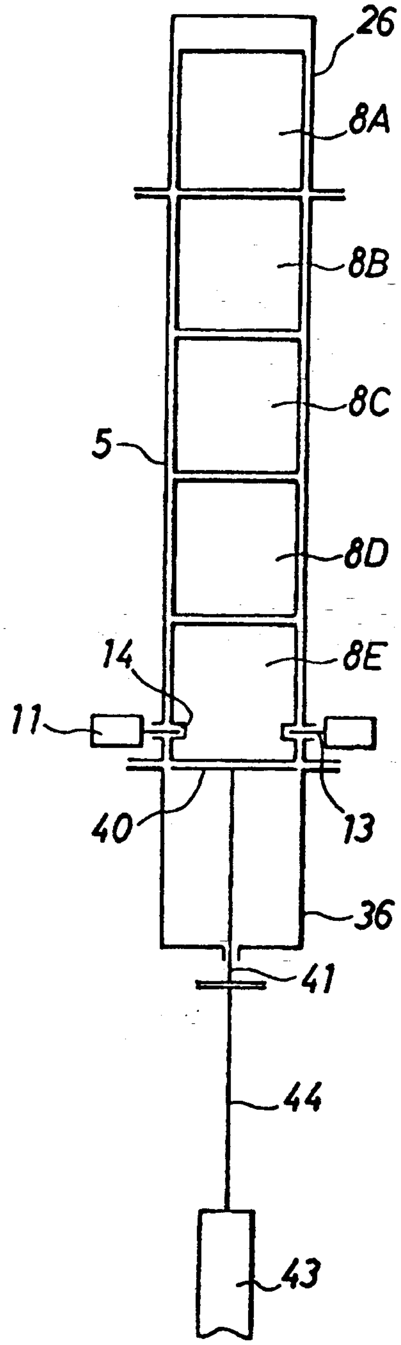


FIG.7

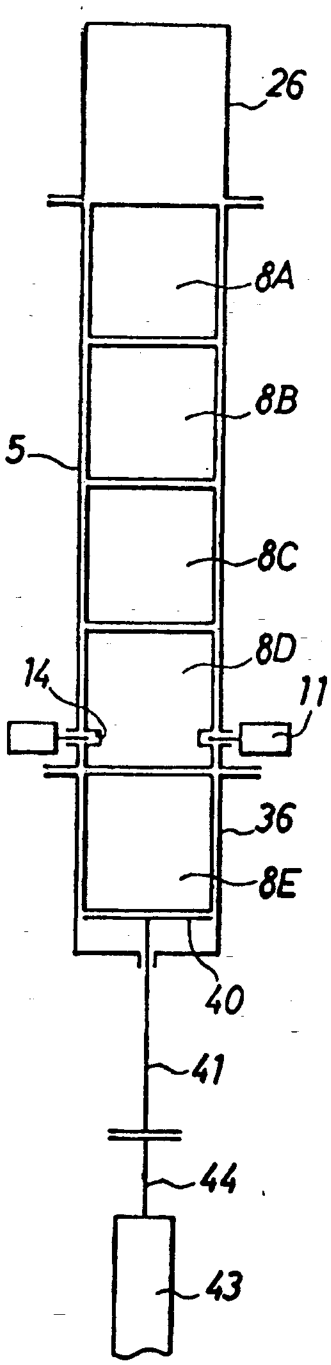


FIG.8

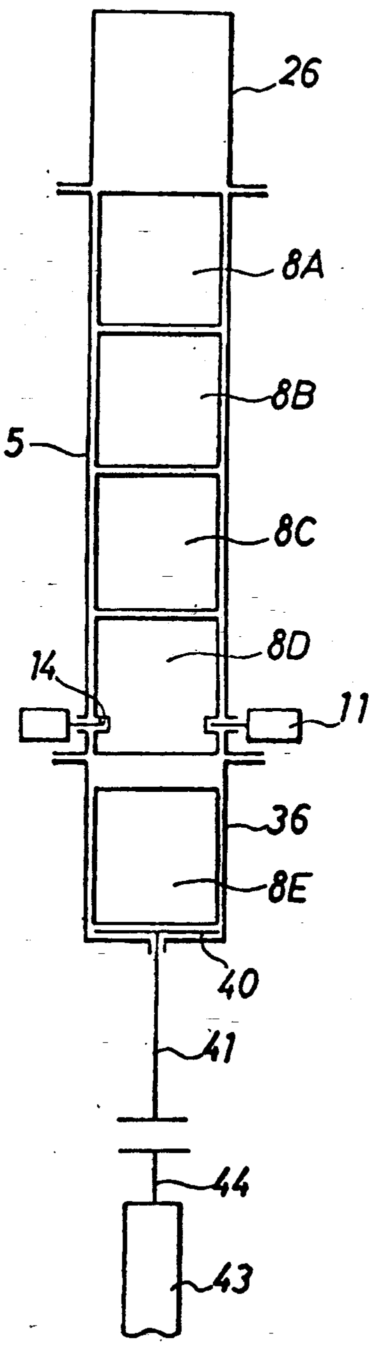


FIG.9

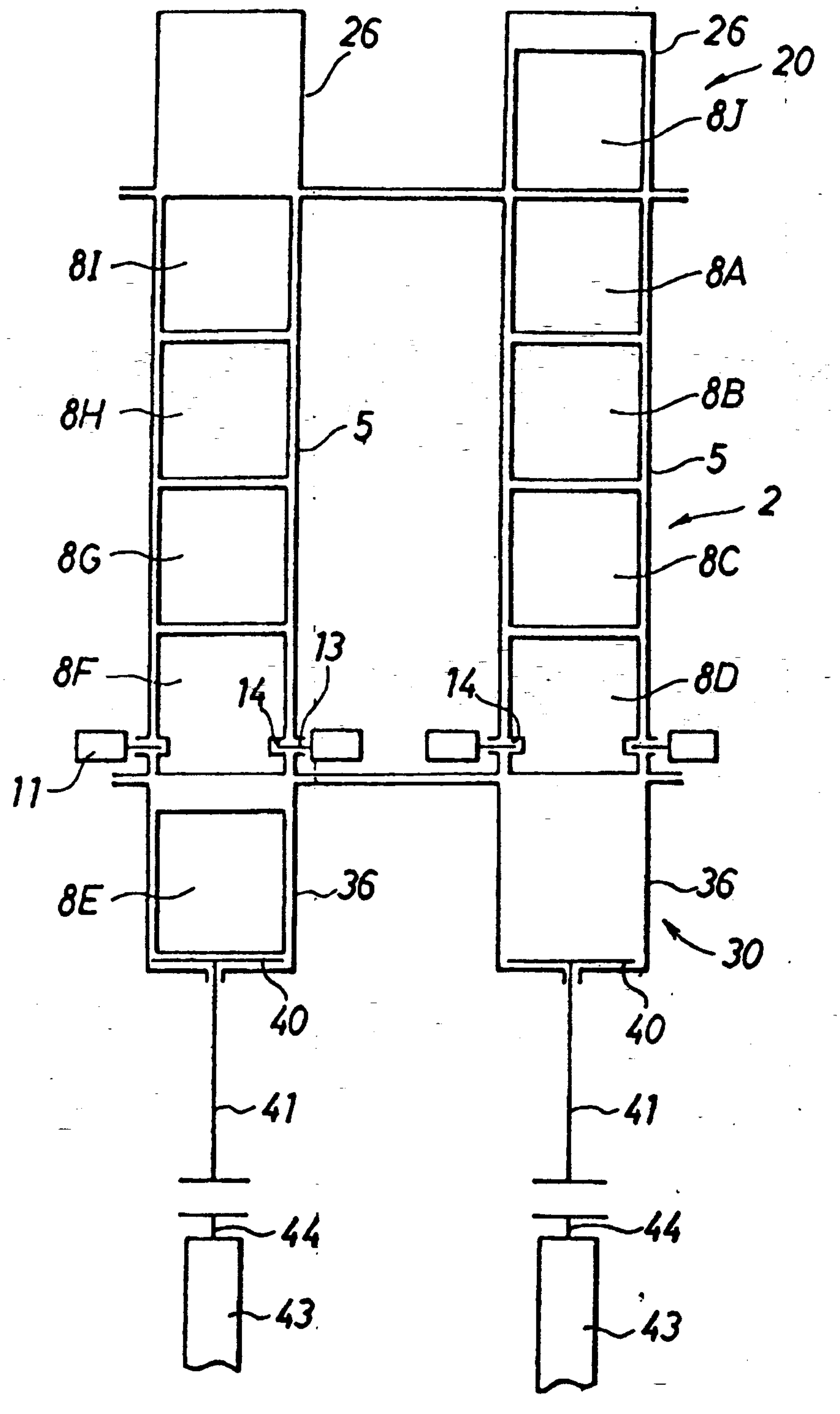
26
26
20
8J
8I
8A
8H
8B
5
5
2
8G
8C
8F
13
14
14
8D
11
8E
36
36
30
40
40
41
41
44
44
43
43

FIG.10

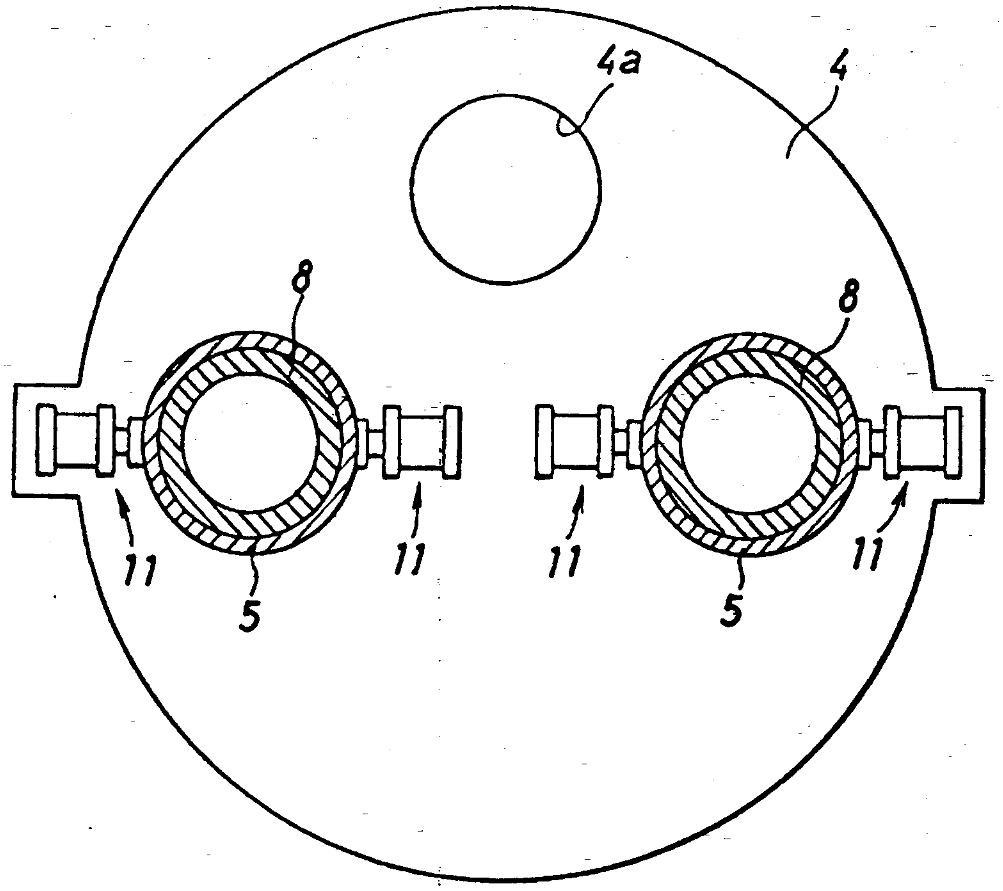


FIG. 11

FIG.3

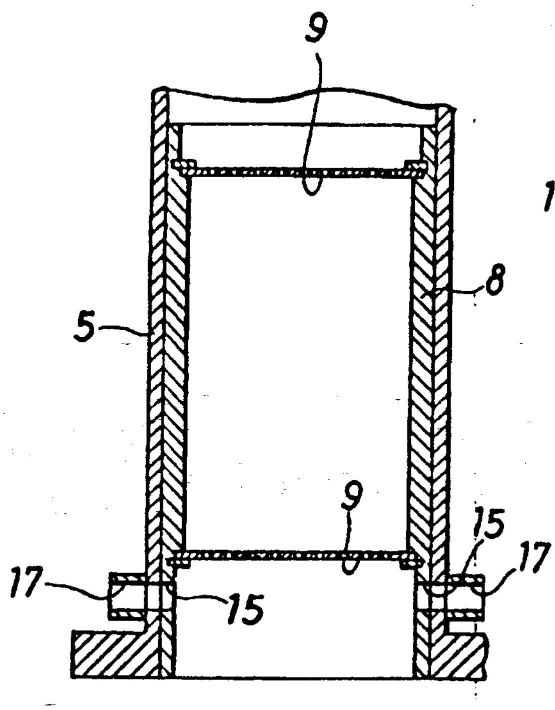


FIG.12

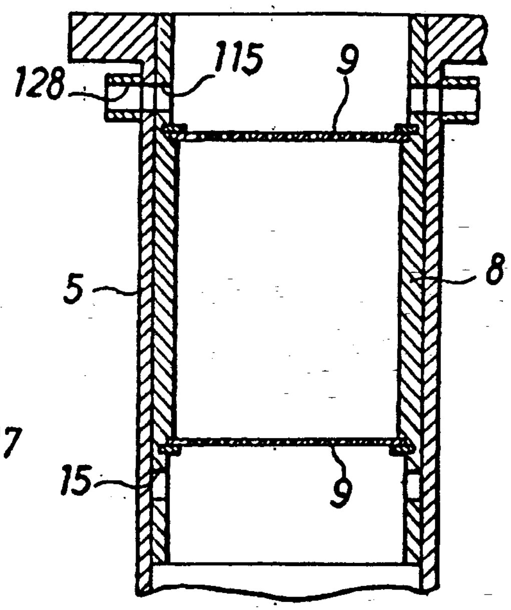


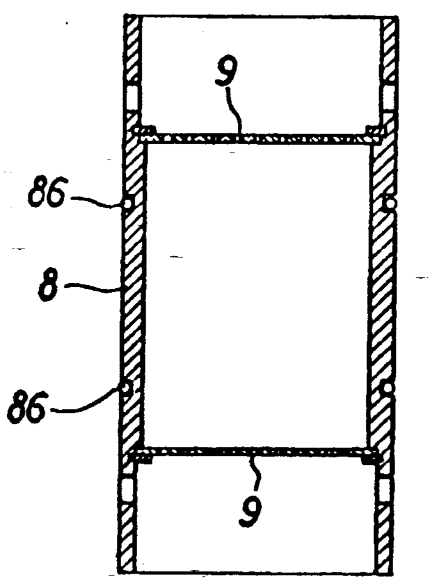


FIG.28

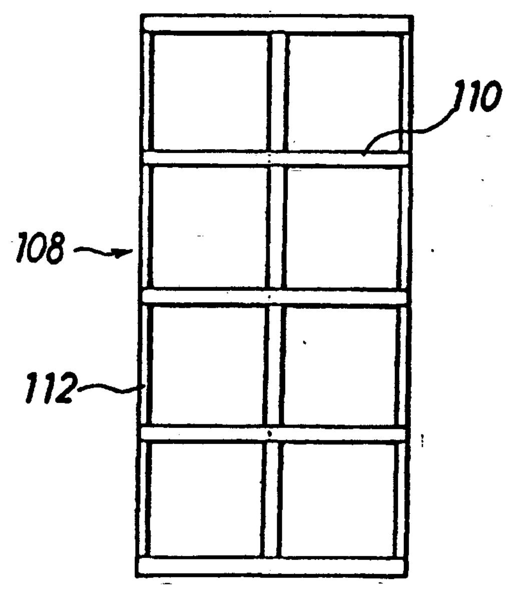


FIG.13

FIG.14

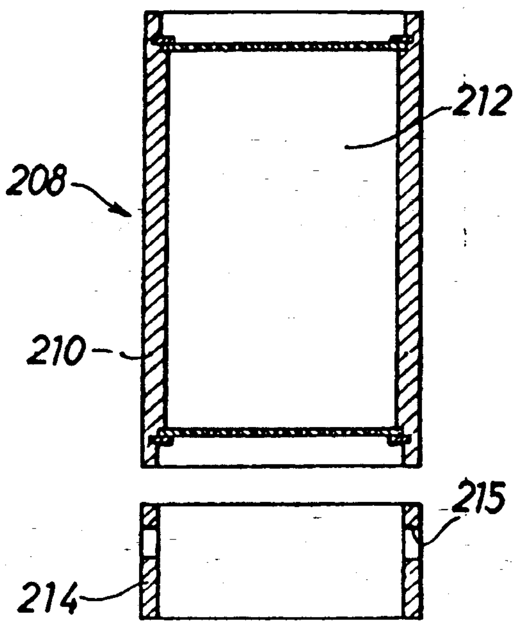


FIG.15

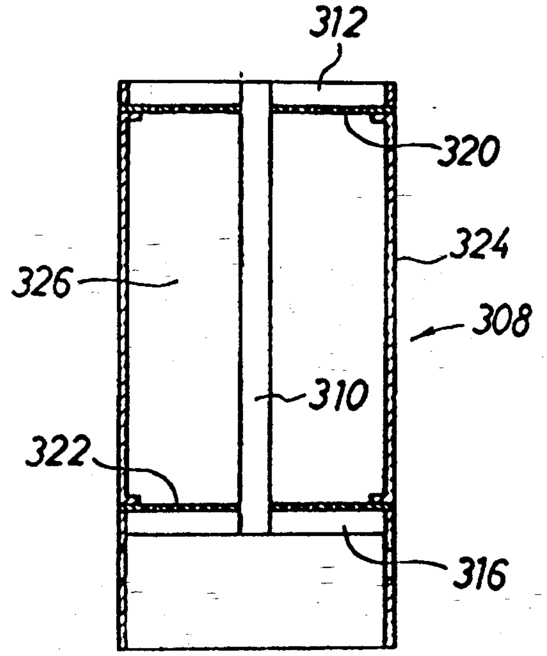


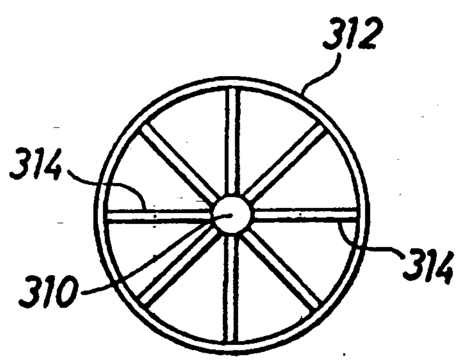


FIG.16

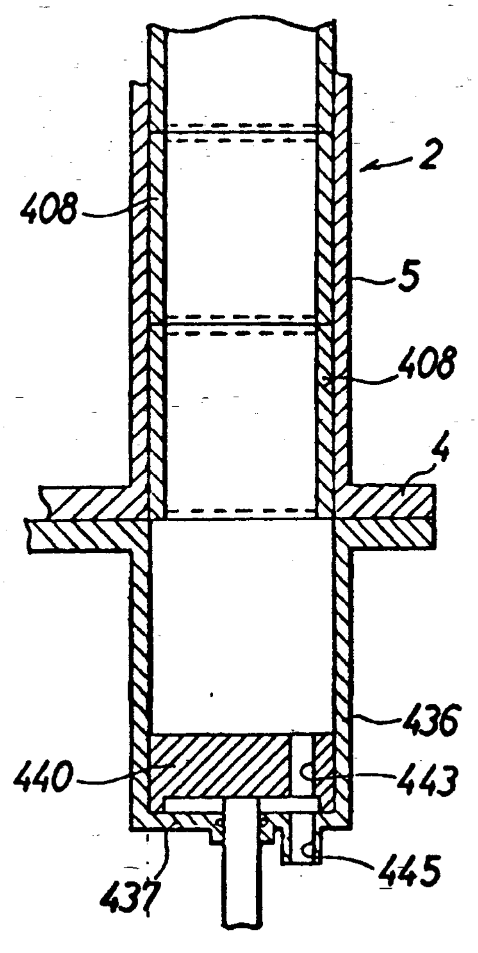


FIG.17

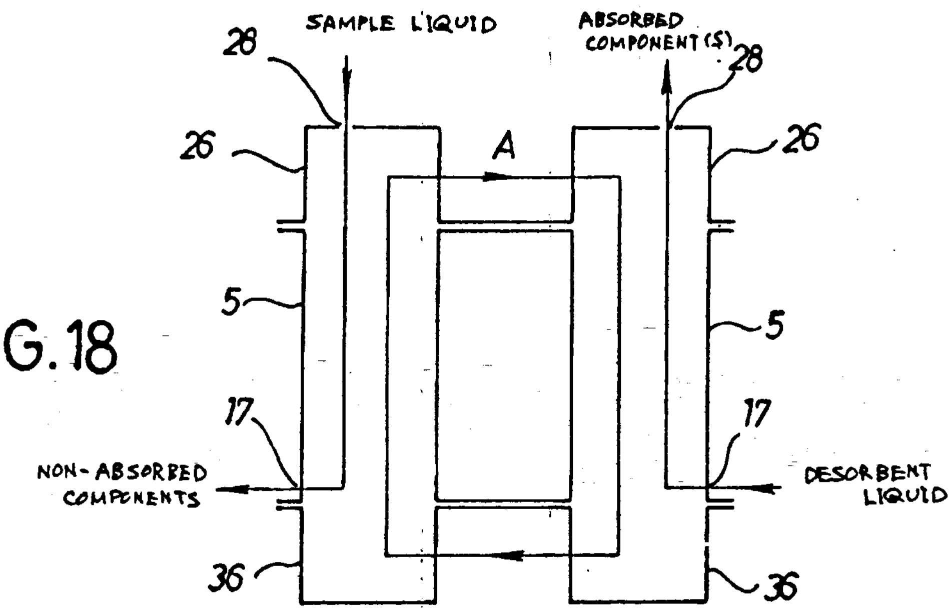
SAMPLE LIQUID
ABSORBED COMPONENT(S)
28
26
A
5
17
NON-ABSORBED COMPONENTS
DESORBENT LIQUID
36

FIG.18

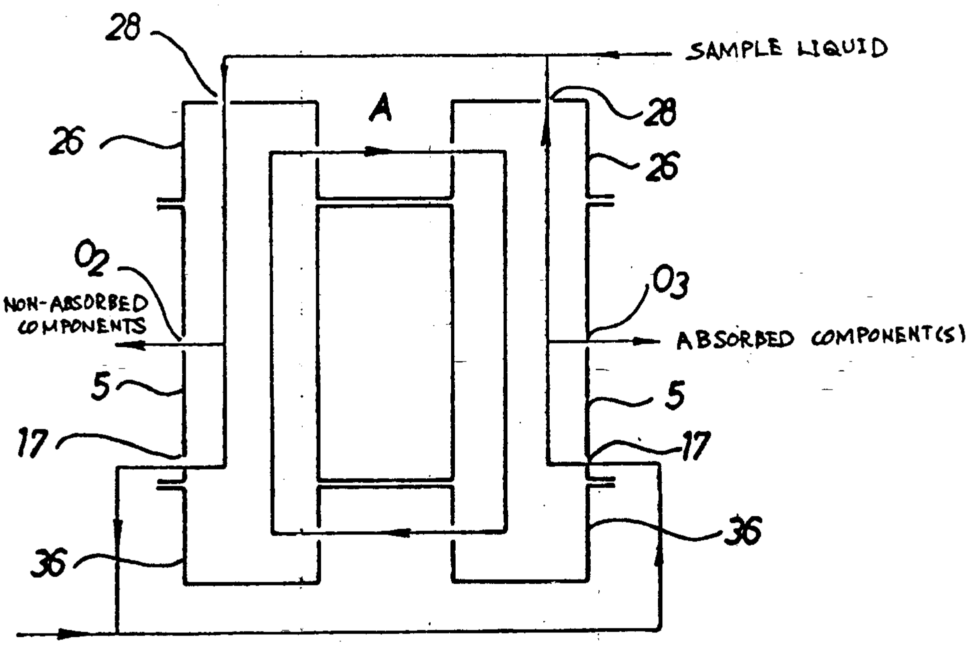
28
SAMPLE LIQUID
A
26
$O_2$
$O_3$
NON-ABSORBED COMPONENTS
ABSORBED COMPONENT(S)
5
17
36

FIG.20

FIG.19

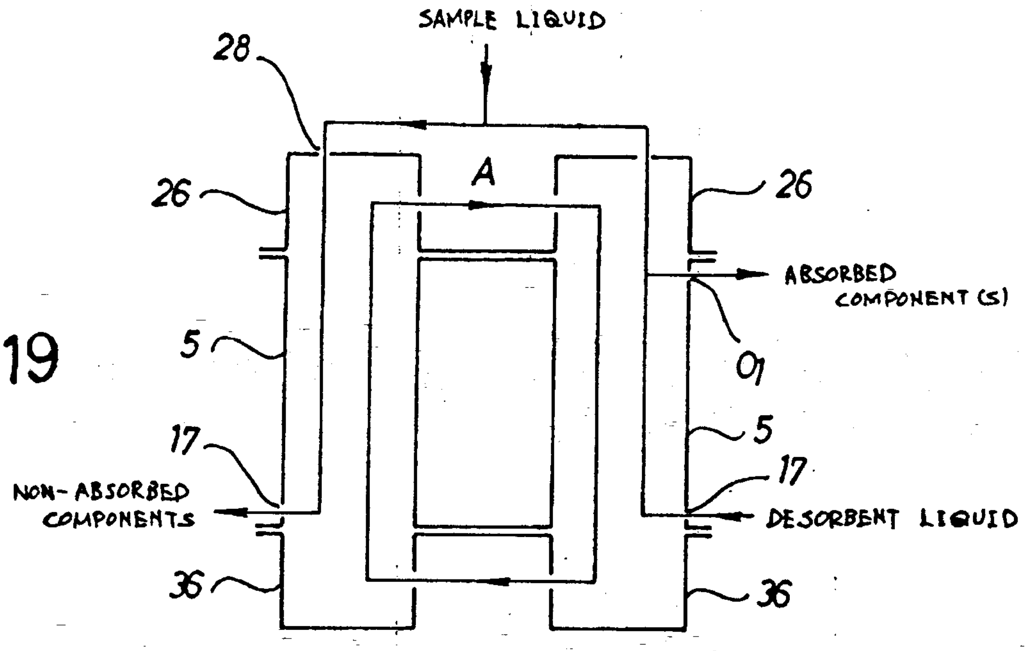
SAMPLE LIQUID
28
A
26
26
ABSORBED COMPONENT (S)
5
01
5
17
17
NON-ABSORBED COMPONENTS
DESORBENT LIQUID
36
36

FIG. 21

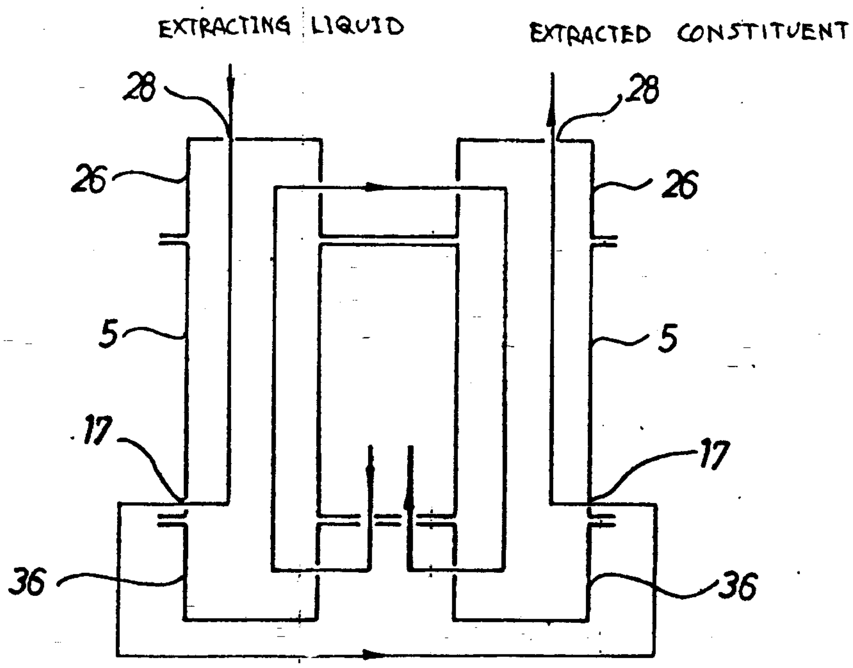
EXTRACTING LIQUID
EXTRACTED CONSTITUENT
28
28
26
26
5
5
17
17
36
36

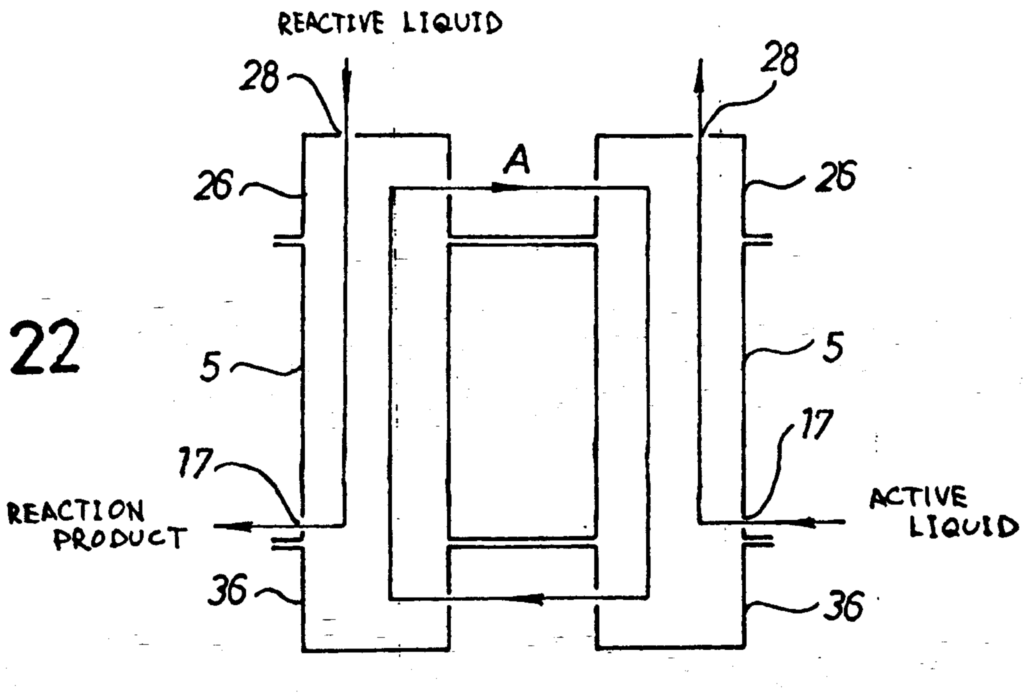
REACTIVE LIQUID
28
28
A
26
26
5
5
17
17
REACTION PRODUCT
ACTIVE LIQUID
36
36

FIG. 22

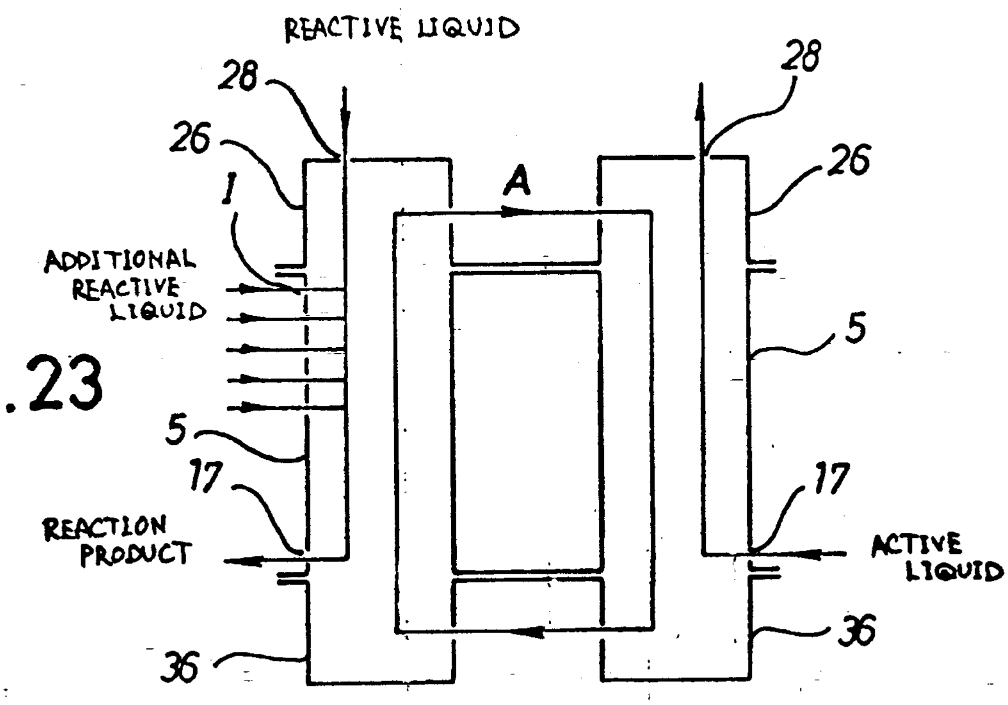
REACTIVE LIQUID
28
28
26
26
A
1
ADDITIONAL REACTIVE LIQUID
5
5
17
17
REACTION PRODUCT
ACTIVE LIQUID
36
36

FIG. 23

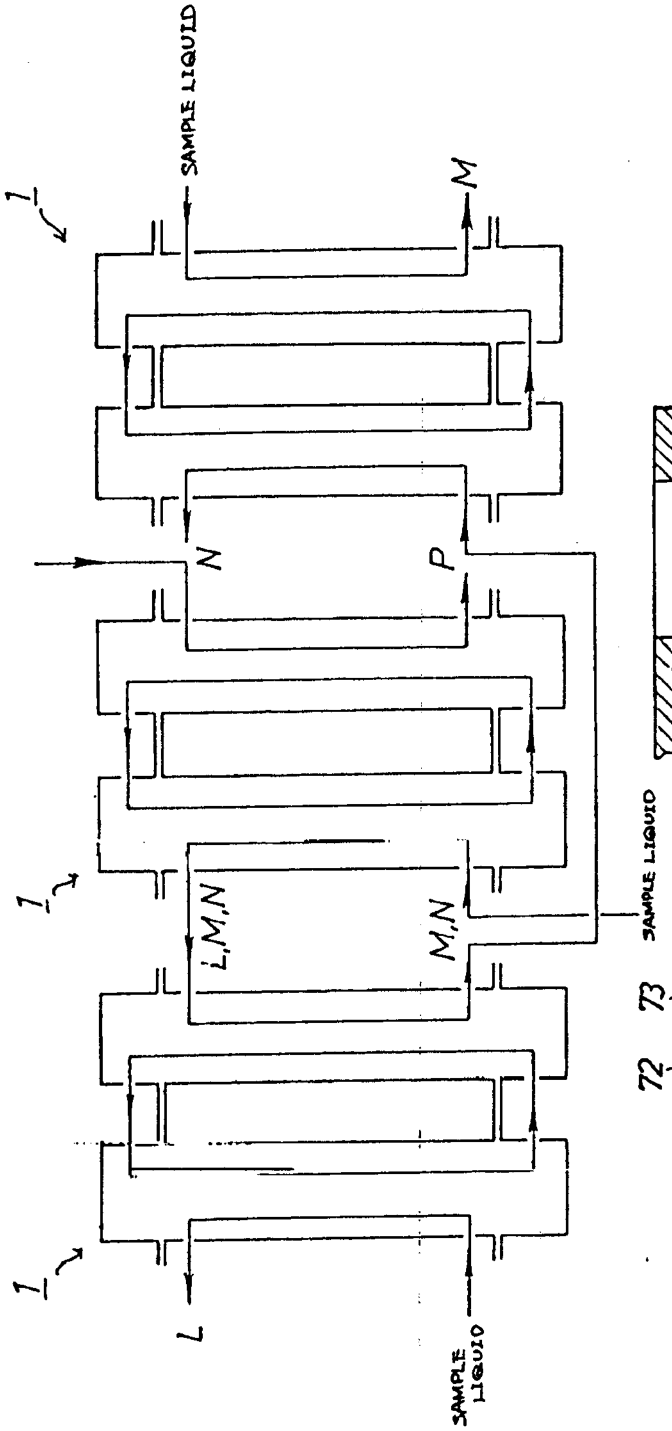


FIG. 24

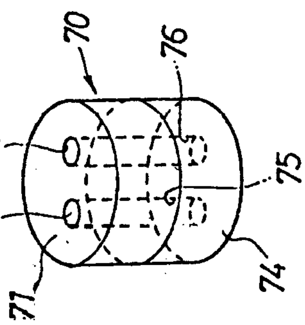


FIG. 25

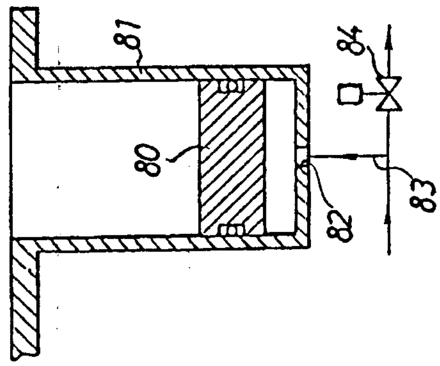


FIG. 26

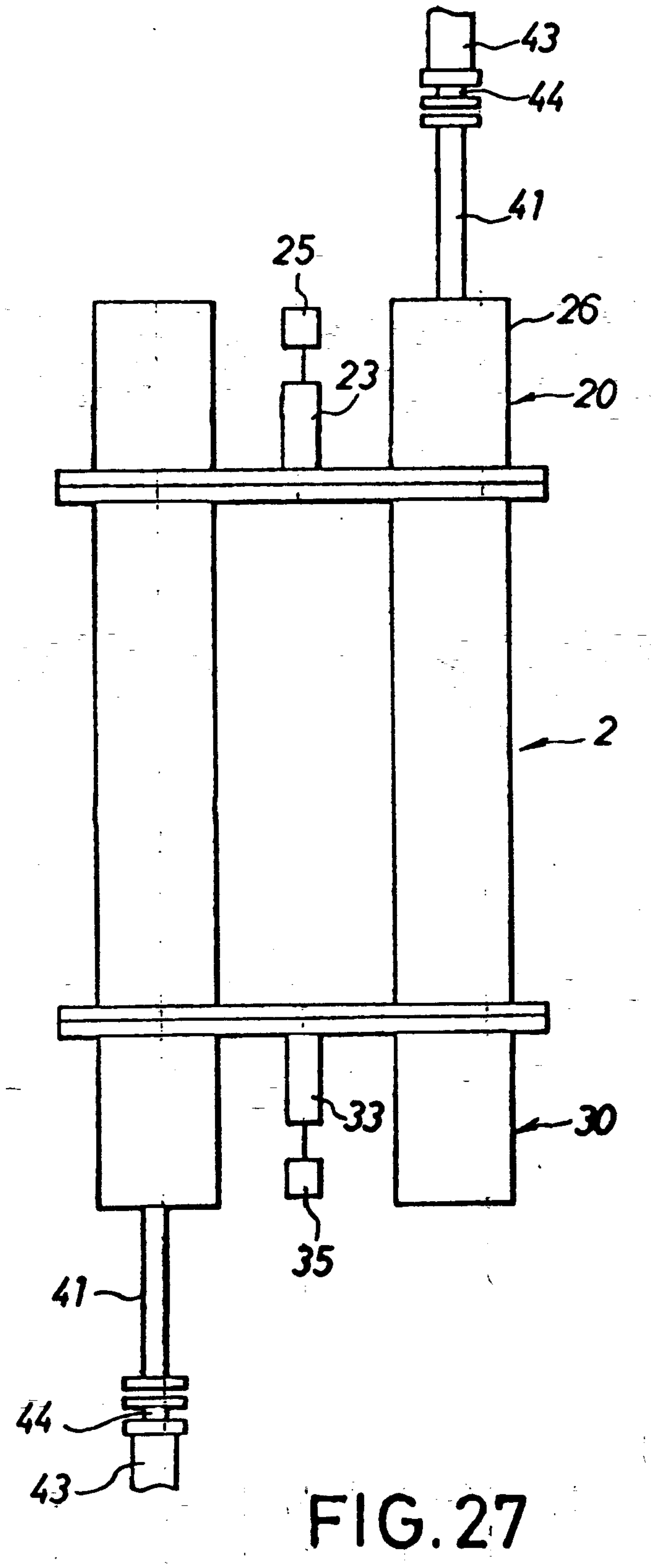


FIG. 27

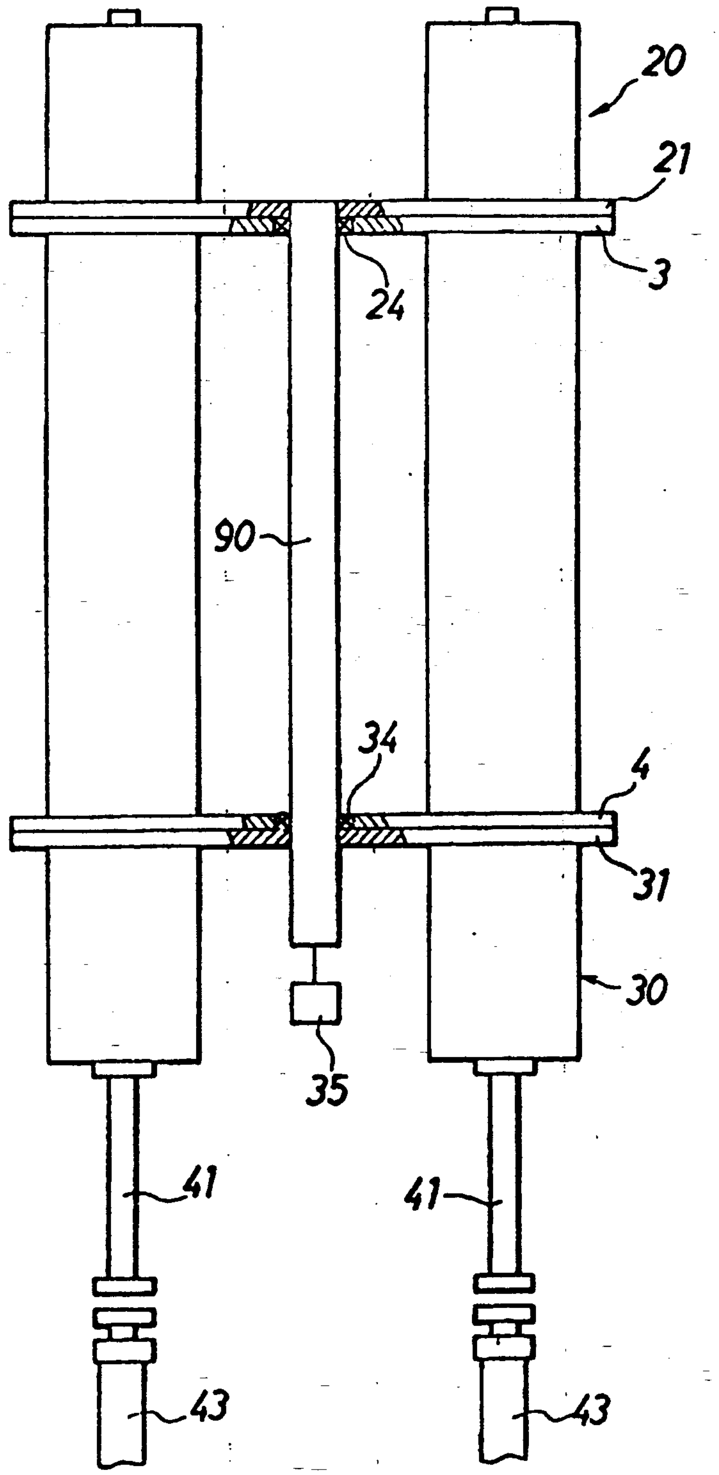


FIG. 29

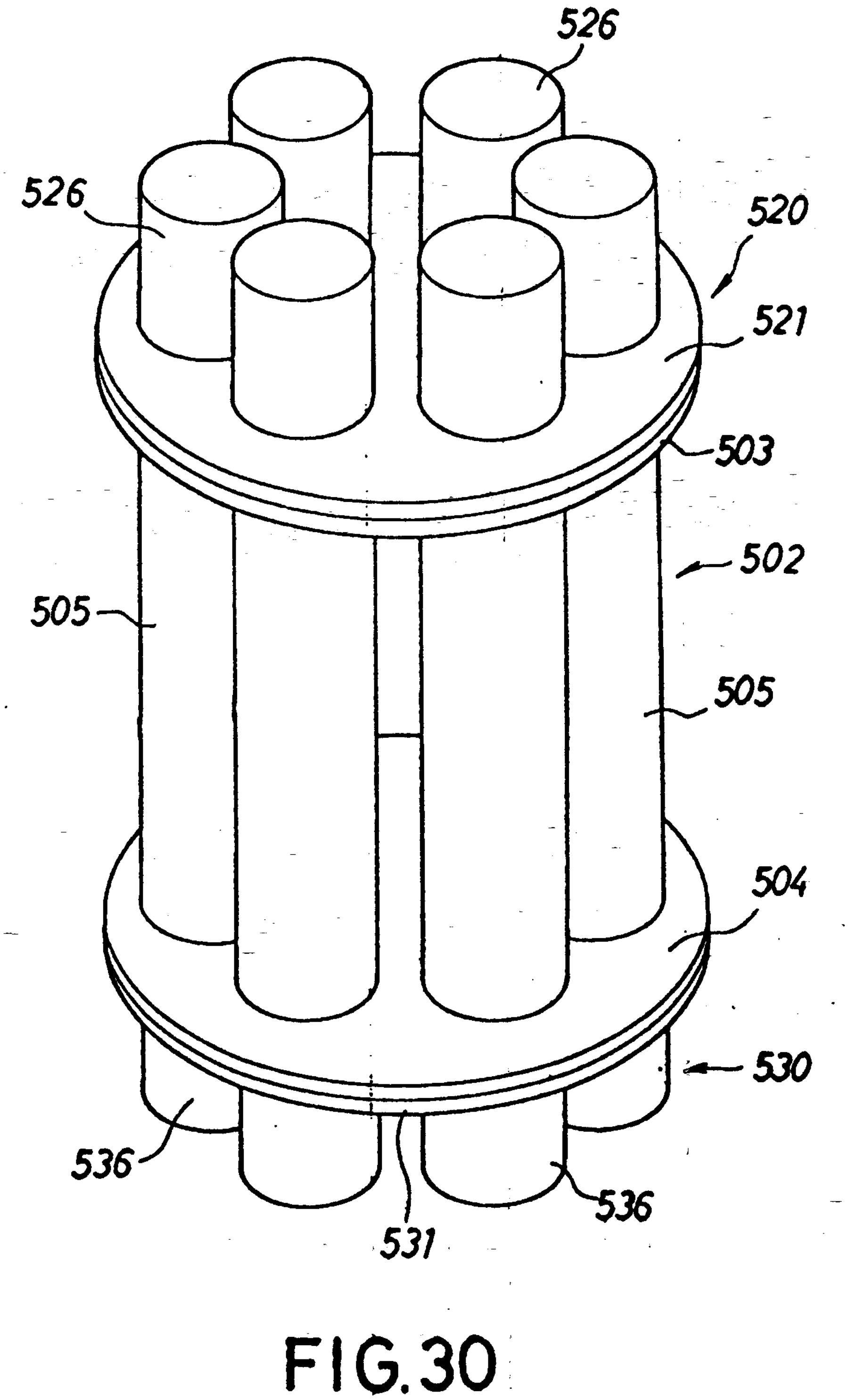


FIG.30